# EUROPÄISCHE PATENTANMELDUNG

(11) **EP 2 065 535 A1**
(43) Veröffentlichungstag der Anmeldung: **03.06.2009**
(21) Anmeldenummer: 08019765.0
(22) Anmeldetag: 12.11.2008
(51) Int. Cl.: E04F 13/08, F16B 13/00, F16B 13/12

(54) **Dämmstoffhalter**

(30) Priorität: 29.11.2007 DE 102007057532
(71) Anmelder: fischerwerke GmbH & Co. KG, 72178 Waldachtal (DE)
(72) Erfinder: Renz, Jürgen, 72202 Nagold (DE)

(57) **Zusammenfassung**

Bei einem Dämmstoffhalter (1) mit einem Halteteller (2), einem Spreizbereich (4), einem Hohlschaft (3), der den Spreizbereich (4) mit dem Halteteller (2) verbindet, und einem stiftartigen Spreizelement (6), das zum Aufspreizen des Spreizbereichs (4) durch den Hohlschaft (3) in den Spreizbereich (4) einbringbar ist, ist vorgesehen, dass der Dämmstoffhalter (1) eine Teleskopführung (11) für das stiftartige Spreizelement (6) aufweist, die das Spreizelement (6) in Längsrichtung verschiebbar und fluchtend zum Hohlschaft (3) und zum Spreizelement (6) aus dem Hohlschaft (3) vorsteht, wenn der Dämmstoffhalter (1) nicht aufgespreizt ist und wobei das Spreizelement (6) zum Aufspreizen des Dämmstoffhalters (1) im Hohlschaft (3) versenkbar ist. Dadurch kann der Hohlschaft (2) kürzer als der Spreizbereich (4) ausgebildet sein, wodurch eine Befestigung einer dünnen Isolierung (5) möglich ist.

## Beschreibung

Die Erfindung betrifft einen Dämmstoffhalter mit den Merkmalen des Oberbegriffs des Anspruchs 1.

Aus der EP 844 402 A1 ist ein Dämmstoffhalter bekannt. Dieser weist einen Dämmstoffteller, einen Hohlschaft und einen Spreizbereich auf, die alle einstückig miteinander sind und wobei der Hohlschaft den Halteteller mit dem Spreizbereich verbindet. Der Spreizbereich ist nach Art eines Spreizdübels ausgebildet, er wird zur Verankerung des Dämmstoffhalters durch Einbringen eines stiftartigen Spreizelements aufgespreizt. Das stiftartige Spreizelement ist normalerweise ein Nagel oder eine Schraube. Der Halteteller weist ein Loch auf, durch das der Hohlschaft zugänglich ist. Seine Form bestimmt sich anhand seines Zwecks, eine Dämmstoffplatte oder -matte auf einer ausreichend großen Fläche zu übergreifen, der Halteteller muss also keine Tellerform aufweisen. Mit dem Begriff Halteteller soll beispielsweise auch ein in den Dämmstoff einschraubbarer wendelförmiger Halteteller, wie aus Druckschrift DE 10 2005 000 147 A1 bekannt, umfasst sein.

Zum Aufspreizen des Dämmstoffhalters wird, wie bereits ausgeführt, ein stiftartiges Spreizelement durch den Hohlschaft in den Spreizbereich eingebracht. Zu Isolierzwecken wird ein Stopfen in den Hohlschaft eingebracht, der zugleich ein Eintreibwerkzeug zum Eintreiben des stiftartigen Spreizelements in den Spreizbereich bildet.

In einem Auslieferungszustand ist das stiftartige Spreizelement bereits im Dämmstoffhalter aufgenommen und der Stopfen greift mit einem Ende ein kurzes Stück in den Hohlschaft ein, so dass er klemmend hält. Der Stopfen steht aus dem Hohlschaft und über den Halteteller des Dämmstoffhalters vor. Der Hohlschaft muss mindestens so lang sein wie die Strecke, um die das stiftartige Spreizelement in den Spreizbereich eingebracht wird, weil er ansonsten den Stopfen nicht über dessen gesamte Länge aufnehmen kann.

Aufgabe der Erfindung ist, einen Dämmstoffhalter mit einem stiftartigen Spreizelement vorzuschlagen, dessen Hohlschaft kürzer sein kann als ein Überstand des Spreizelements aus dem nicht aufgespreizten Dämmstoffhalter. Dies ist für Fälle wichtig, bei denen die Dämmstoffdicke gering gegenüber der Länge des Spreizbereichs ist, also beispielsweise im Bereich von Fensterleibungen.

Diese Aufgabe wird erfindungsgemäß durch die Merkmale des Anspruchs 1 gelöst. Der erfindungsgemäße Dämmstoffhalter weist eine Teleskopführung für das stiftartige Spreizelement auf. Die Teleskopführung weist mindestens ein Element auf, das gegenüber dem Dämmstoffhalter verschiebbar ist und gegenüber dem das stiftartige Spreizelement verschiebbar ist. Ein Schiebeweg des stiftartigen Spreizelements gegenüber dem Dämmstoffhalter ist dadurch länger als ein Schiebeweg des Spreizelements gegenüber dem verschiebbaren Element und als ein Schiebeweg des verschiebbaren Elements gegenüber dem Dämmstoffhalter. Der Verschiebeweg des stiftartigen Spreizelements gegenüber dem Dämmstoffhalter ist die Summe des Verschiebewegs des stiftartigen Spreizelements gegenüber dem verschiebbaren Element und des Verschiebewegs des verschiebbaren Elements gegenüber dem Dämmstoffhalter. Durch mehrere verschiebbare Elemente verlängert sich der Verschiebeweg des stiftartigen Spreizelements gegenüber dem Dämmstoffhalter. Die verschiebbaren Elemente sind gegeneinander verschiebbar. Die Teleskopführung führt das stiftartige Spreizelement in Längsrichtung verschiebbar und fluchtend zum Hohlschaft und zum Spreizbereich am Dämmstoffhalter. Die Teleskopführung ermöglicht einen Verschiebeweg des stiftartigen Spreizelements gegenüber dem Dämmstoffhalter, der länger als der Hohlschaft des Dämmstoffhalters ist. Die Länge des Hohlschafts bestimmt normalerweise eine Mindestdicke des mit dem Dämmstoffhalter an einem Untergrund zu befestigenden Dämmstoffs. Die Erfindung ermöglicht einen Dämmstoffhalter für dünne Dämmstoffe, ohne den Spreizbereich zu verkürzen.

Ist der Dämmstoffhalter nicht aufgespreizt, d.h. reicht das stiftartige Spreizelement nicht bis in den Spreizbereich, steht es auf der Seite des Haltetellers aus dem Hohlschaft vor. Das Spreizelement lässt sich so weit in den Spreizbereich einbringen, wie es bei nicht aufgespreiztem Dämmstoffhalter aus dessen Hohlschaft vorsteht. Die erfindungsgemäße Teleskopführung ermöglicht, wie bereits ausgeführt, dass das Spreizelement weiter aus dem nicht aufgespreizten Dämmstoffhalter vorsteht als der Hohlschaft lang ist. Zum Aufspreizen ist das Spreizelement im Hohlschaft des Dämmstoffhalters versenkbar.

In bevorzugter Ausgestaltung der Erfindung weist die Teleskopführung eine Hülse als verschiebbares Element auf. Die Hülse umschließt das stiftartige Spreizelement und führt es in seiner Längsrichtung verschiebbar. Die Hülse ist im Hohlschaft des Dämmstoffhalters versenkbar und damit in Längsrichtung gegenüber dem Dämmstoffhalter verschiebbar.

Eine Ausgestaltung der Erfindung sieht vor, dass das stiftartige Spreizelement einen Nagel oder eine Schraube aufweist. Dies umfasst auch einen Schraubnagel, d.h. beispielsweise einen Nagel mit Sägezahngewinde, der eingeschlagen und herausgeschraubt werden kann.

Zwecks Wärmeisolierung und Vermeidung einer Kältebrücke sieht eine Ausgestaltung der Erfindung einen thermisch isolierenden Kopf des stiftartigen Spreizelements vor. Das stiftartige Spreizelement kann insgesamt aus einem thermisch isolierenden Werkstoff, beispielsweise aus Kunststoff bestehen. Eine andere Möglichkeit ist, einen Kopf oder ein hinteres Ende des stiftartigen Spreizelements mit Kunststoff zu umspritzen oder in anderer Weise mit einem thermisch isolierenden Material zu versehen, das den thermisch isolierenden Kopf bildet, wenn das stiftartige Spreizelement aus einem wärmeleitenden Werkstoff wie Metall besteht.

Eine Ausgestaltung der Erfindung sieht eine Einschlagsperre vor, die das Spreizelement in der aus dem Hohlschaft vorstehenden Stellung hält, in der das stiftartige Spreizelement den Dämmstoffhalter nicht aufspreizt. Durch die Einschlagsperre lässt sich der Dämmstoffhalter beispielsweise durch Hammerschläge auf das aus ihm vorstehende Spreizelement durch einen Dämmstoff in ein Bohrloch in einem Untergrund einbringen. Dabei verhindert die Einschlagsperre, dass das stiftartige Spreizelement in den Spreizbereich eingebracht wird und diesen vorzeitig aufspreizt. Sitzt der Halteteller auf dem Dämmmaterial auf und hält den Dämmstoffhalter auf diese Weise gegen tieferes Einbringen in den Untergrund, lässt sich die Einschlagsperre durch eine ausreichend hohe Kraft überwinden und das stiftartige Spreizelement in den Spreizbereich des Dämmstoffhalters einbringen, wodurch der Dämmstoffhalter aufgespreizt und im Untergrund verankert wird.

Die Einschlagsperre kann beispielsweise eine Schnappeinrichtung und/oder eine Solltrennstelle, die umgangssprachlich auch als Sollbruchstelle bezeichnet wird, aufweisen.

Die Erfindung wird nachfolgend anhand in der Zeichnung dargestellter Ausführungsbeispiele näher erläutert.

### Es zeigen:

- Figur 1: ein stiftartiges Spreizelement gemäß der Erfindung;
- Figuren 2-4: einen Dämmstoffhalter mit dem Spreizelement aus Figur 1 gemäß der Erfindung in aufeinander folgenden Verankerungsschritten;
- Figuren 5 und 7: weitere stiftförmige Spreizelemente gemäß der Erfindung; und
- Figur 6: Abwandlungen des Dämmstoffhalters aus Figur 2 mit dem Spreizelement aus Figur 5.

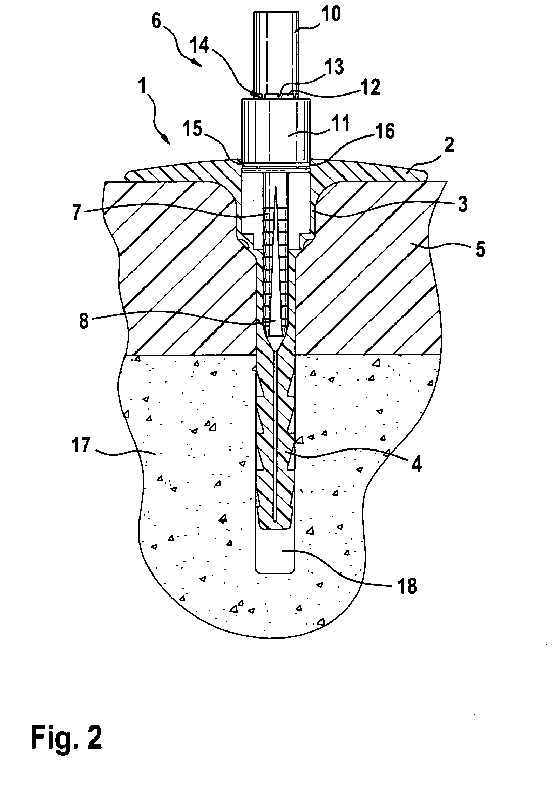

Der in Figuren 2-4 dargestellte, erfindungsgemäße Dämmstoffhalter 1 weist einen Halteteller 2, einen Hohlschaft 3 und einen Spreizbereich 4 auf. Der Hohlschaft 3 verbindet den Spreizbereich 4 und den Halteteller 2. Der Halteteller 2, der Hohlschaft 3 und der Spreizbereich 4 sind miteinander einstückige Bestandteile des Dämmstoffhalters 1 aus Kunststoff. Vom Hohlschaft 3 zum Spreizbereich 4 verjüngt sich der Dämmstoffhalter 1 sowohl im Außendurchmesser als auch im Innern. Der Spreizbereich 4 ist nach Art eines üblichen Spreizdübels ausgebildet. Der Halteteller 2 ist kreisscheibenförmig mit Ausnehmungen, so dass radiale Speichen gebildet sind. Er weist ein Mittelloch auf, das eine Mündung des Hohlschafts 3 bildet. Die Gestaltung des Haltetellers 2 ist nicht wichtig, er braucht eine ausreichende Größe zum Übergreifen und Halten einer Isolierung 5.

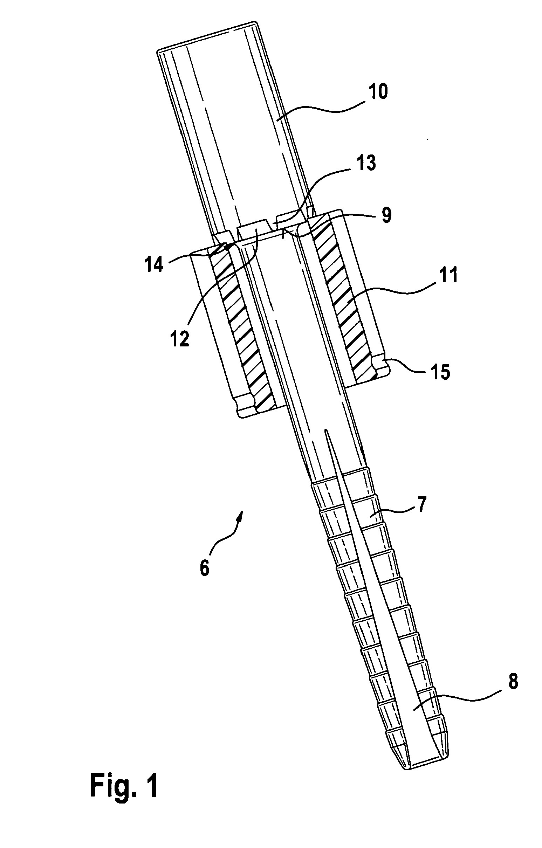

Des Weiteren weist der Dämmstoffhalter 1 ein stiftartiges Spreizelement 6 auf, das in Figur 1 als Einzelteil dargestellt ist. In Figuren 1-4 besteht das stiftartige Spreizelement 6 aus Kunststoff und weist einen Nagel 7 auf. Der Nagel 7 kann massiv oder - wie im Ausführungsbeispiel - durch eine Längsnut 8 radial federnd wie eine Spannhülse ausgebildet sein. Die Längsnut 8 beginnt offen an einem vorderen Ende des Nagels 7 und ist vorzugsweise etwas länger als der Spreizbereich 4 des Dämmstoffhalters 1. Sie verkleinert ihren Querschnitt nach hinten.

An einem hinteren Ende vergrößert sich der Nagel 7 mit einer Ringstufe 9 zu einem zylinderförmigen Kopf 10, der so lang wie der Hohlschaft 3 des Dämmstoffhalters 1 ist. An einem vorderen Ende des Kopfs 10, also an der Ringstufe 9, weist das Spreizelement 6 eine Hülse 11 auf, die sich vom Kopf 10 nach vorn erstreckt. Die Hülse 11 ist so lang wie der Hohlschaft 3, ihr Außendurchmesser stimmt mit einem Innendurchmesser des Hohlschafts 3 und ihr Innendurchmesser mit dem Durchmesser des Kopfs 10 überein. Am Übergang zur Ringstufe 9 weist der Kopf 10 eine Fase 12 auf, an der über den Umfang verteilt Rippen 13 in Längsrichtung abstehen, die sich entlang gedachter Mantellinien des Kopfs 10 erstrecken und an der Ringstufe 9 enden. An ihren Spitzen gehen die Rippen 13 in die Hülse 11 über, die Übergänge bilden Solltrennstellen 14, die auch als Sollbruchstellen bezeichnet werden können. Es sind also die Hülse 11 und der Nagel 7 mit seinem zylinderförmigen Kopf 10 einstückig miteinander.

Nahe eines vorderen Randes weist die Hülse 11 eine umlaufende Rille 15 auf, die mit einem komplementären, umlaufenden Wulst 16 in der Mündung des Hohlschafts 3 des Dämmstoffhalters 1 eine Schnappeinrichtung 15, 16 bildet.

Der Dämmstoffhalter 1 dient wie in Figuren 2-4 dargestellt zur Befestigung der Isolierung 5 an einem Untergrund 17. Die Isolierung 5 ist beispielsweise eine Dämmstoffplatte oder Dämmstoffmatte, der Untergrund 17 eine Wand oder Decke aus Beton oder Mauerwerk. Es wird durch die Isolierung 5 ein Loch 18 in den Untergrund 17 gebohrt. Das stiftartige Spreizelement 6 ist im Dämmstoffhalter 1 vormontiert, indem seine Hülse 11 so in die Mündung des Hohlschafts 3 eingebracht ist, dass der umlaufende Wulst 16 in der Mündung des Hohlschafts 3 in die umlaufende Rille 15 der Hülse 11 eingeschnappt ist. Der Nagel 7 ragt durch den Hohlschaft 3 hindurch in Richtung des Spreizbereichs 4, in den er allerdings noch nicht hineinragt und den er noch nicht aufspreizt. Die Hülse 11 steht auf einer dem Hohlschaft 3 und dem Spreizbereich 4 abgewandten Seite des Haltetellers 2 aus dem Halteteller 2 vor. Der Kopf 10 steht aus der Hülse 11 vor. Der Überstand des Kopfs 10 über den Halteteller 2 ist größer als der Hohlschaft 3 lang ist, der Überstand des Kopfs 10 über den Halteteller 2 ist nahezu doppelt so lang wie der Hohlschaft 3. Der Dämmstoffhalter 1 wird durch die Isolierung 5 mit seinem Spreizbereich 4 in das Loch 18 im Untergrund 17 eingebracht. Das Einbringen kann mit Hammerschlägen auf den Kopf 10 des im Dämmstoffhalter 1 vormontierten Spreizelements 6 erfolgen. Die die Rille 15 und den Wulst 16 umfassende Schnappeinrichtung 15, 16 und die Solltrennstellen 14 an den Spitzen der Rippen 13 am Übergang vom Kopf 10 zur Hülse 11 bilden Einschlagsperren 14; 15, 16, die die Impulse der Hammerschläge vom Kopf 10 auf den Dämmstoffhalter 1 übertragen, so dass dieser durch die Isolierung 5 in das Loch 18 im Untergrund 17 eingetrieben werden kann, ohne dass der Nagel 7 in den Spreizbereich 4 eingetrieben wird.

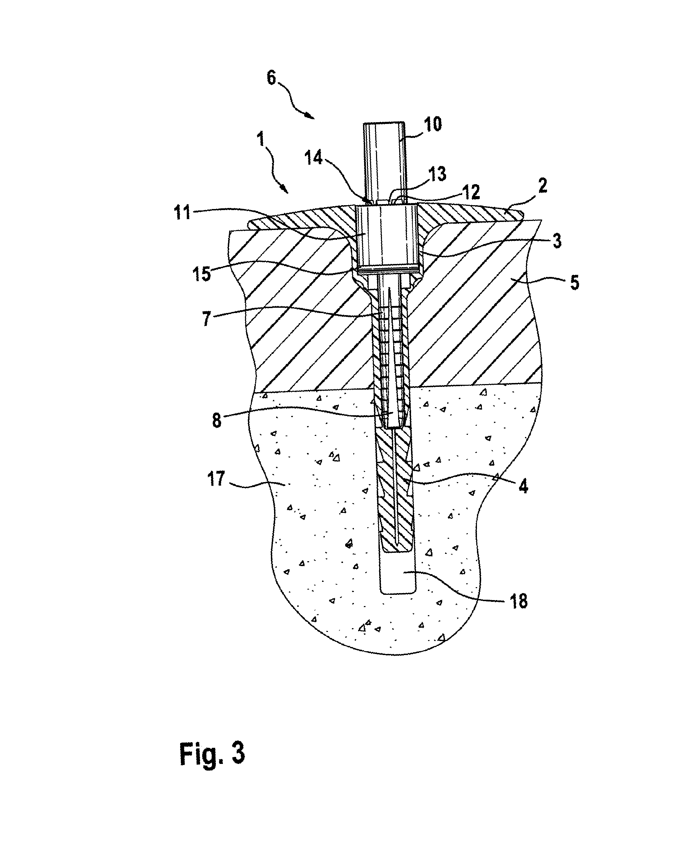

Sitzt der Halteteller 2 auf der Isolierung 5 auf, wie es in Figur 2 zu sehen ist, überwinden weitere Hammerschläge auf den Kopf 10 die Schnappeinrichtung 15, 16, die wie erwähnt eine Einschlagsperre bildet. Durch weitere Hammerschläge wird die Hülse 11 in den Hohlschaft 3 eingetrieben, wie es in Figur 3 zu sehen ist. Zugleich wird der Nagel 7 in den Spreizbereich 4 eingetrieben, was ebenfalls in Figur 3 zu sehen ist.

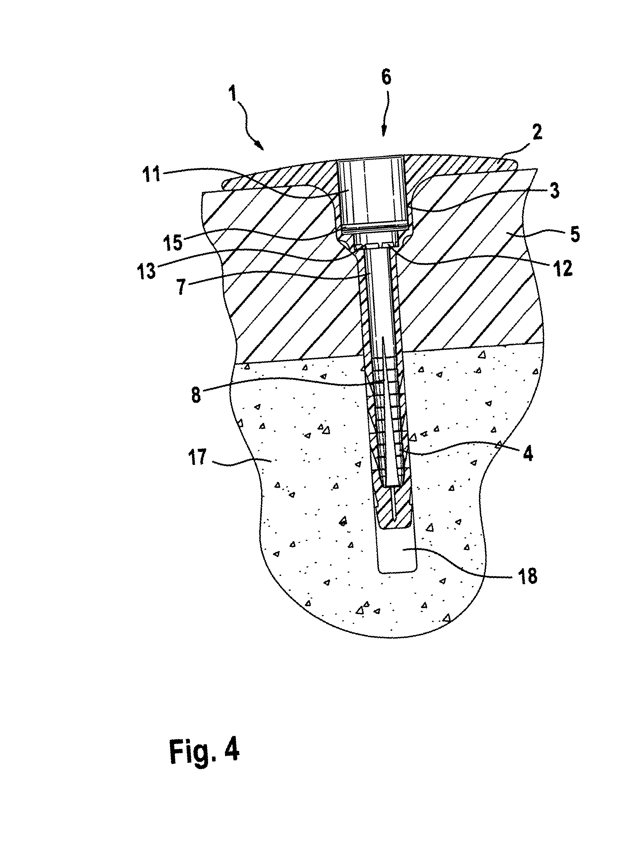

Sitzt die Hülse 11 an einem Grund des Hohlschafts 3 auf, lässt sich der Kopf 10 an den Solltrennstellen 14 von der Hülse 11 trennen und in die Hülse 11 eintreiben, wie es in Figur 4 zu sehen ist. Bei diesem Eintreiben des Kopfs 10 in die bereits in den Hohlschaft 3 eingetriebene Hülse 11 wird der Nagel 7 tiefer in den Spreizbereich 5 des Dämmstoffhalters 1 eingetrieben, wie es in Figur 4 zu sehen ist. Durch das Eintreiben des Nagels 7 des Spreizelements 6 in den als Spreizdübel ausgebildeten Spreizbereich 4 des Dämmstoffhalters 1 wird der Spreizbereich 4 aufgespreizt und der Dämmstoffhalter 1 im Untergrund 17 verankert.

Die Einschlagsperren 15, 16; 14 können auch in umgekehrter Reihenfolge überwunden werden, d.h. dass zuerst die Solltrennstellen 14 zwischen dem Kopf 10 und der Hülse 11 überwunden und der Kopf 10 in die Hülse 11 eingetrieben und anschließend die Schnappeinrichtung 15, 16 überwunden und die Hülse 11 in den Hohlschaft 3 eingetrieben wird.

Durch die Hülse 11 ist das Spreizelement 6 am bzw. im Hohlschaft 3 des Dämmstoffhalters 1 teleskopierbar, die Hülse 11 und der Kopf 10 sind im Hohlschaft 3 versenkbar, die Hülse 11 bildet eine Teleskopführung für das stiftartige, den Nagel 7 aufweisende Spreizelement 6. Die Eintreiblänge, um die der Nagel 7 in den Spreizbereich 4 eintreibbar ist, ist durch die Teleskopführung länger, und zwar nahezu doppelt so lang wie der Hohlschaft 3. Die Hülse 11 und der Kopf 10 bestehen aus Kunststoff und sind somit thermisch isolierend, eine Kältebrücke wird dadurch vermieden.

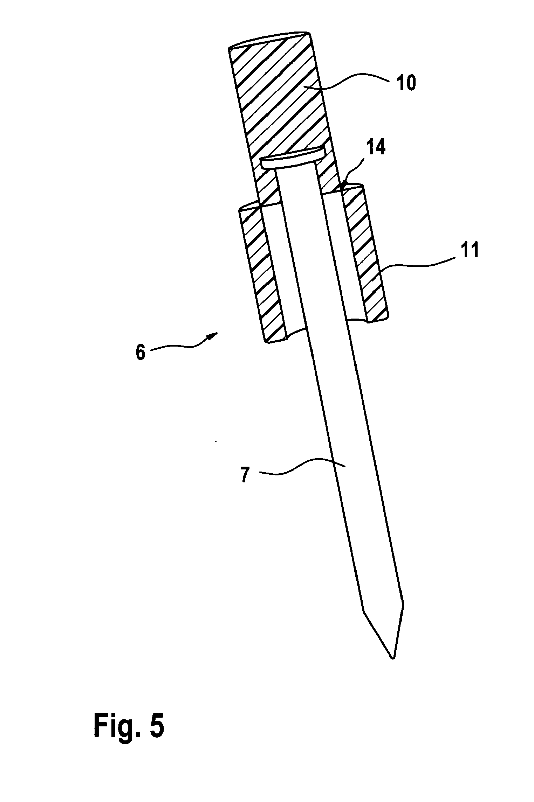

Das in Figur 5 dargestellte Spreizelement 6 weist einen Nagel 7 aus Stahl anstatt aus Kunststoff auf. Ein Kopf des Nagels 7 ist mit dem zylinderförmigen Kopf 10 aus Kunststoff umspritzt, der an den Solltrennstellen 14 einstückig in die Hülse 11 übergeht. Im Übrigen ist das Spreizelement 6 aus Figur 5 gleich ausgebildet und funktioniert in gleicher Weise wie dasjenige aus Figur 1 und es wird zur Vermeidung von Wiederholungen zur Erläuterung der Figur 5 insoweit auf die Ausführungen zu Figuren 1-4 verwiesen.

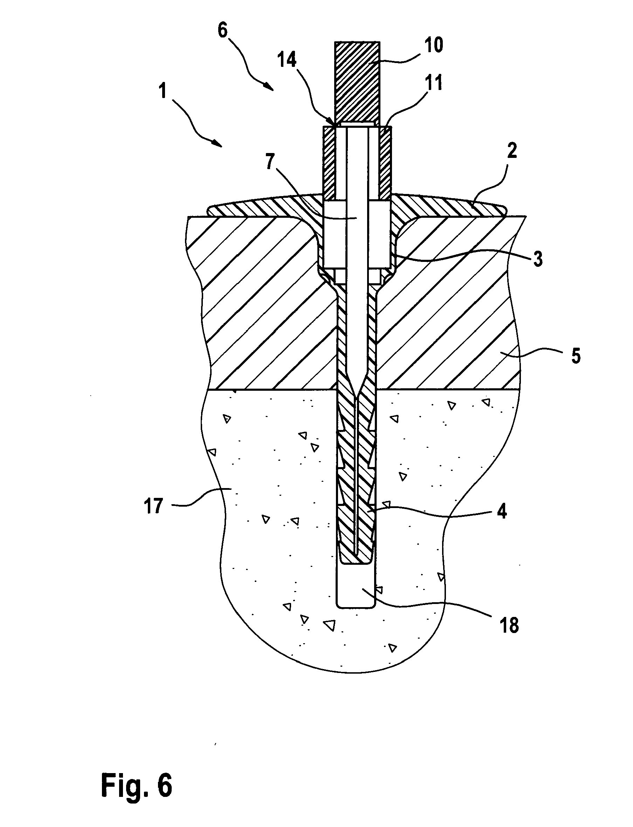

Übereinstimmend mit Figur 5 weist auch in Figur 6 das Spreizelement 6 einen Nagel 7 aus Stahl auf. Im Unterschied zu Figur 5 ist in Figur 6 der Kopf des Nagels 7 nicht mit dem zylindrischen Kopf 10 aus Kunststoff umspritzt, sondern der zylindrische Kopf 10 sitzt auf dem Kopf des Nagels 7 auf. Im Übrigen stimmt Figur 6 mit Figur 5 überein.

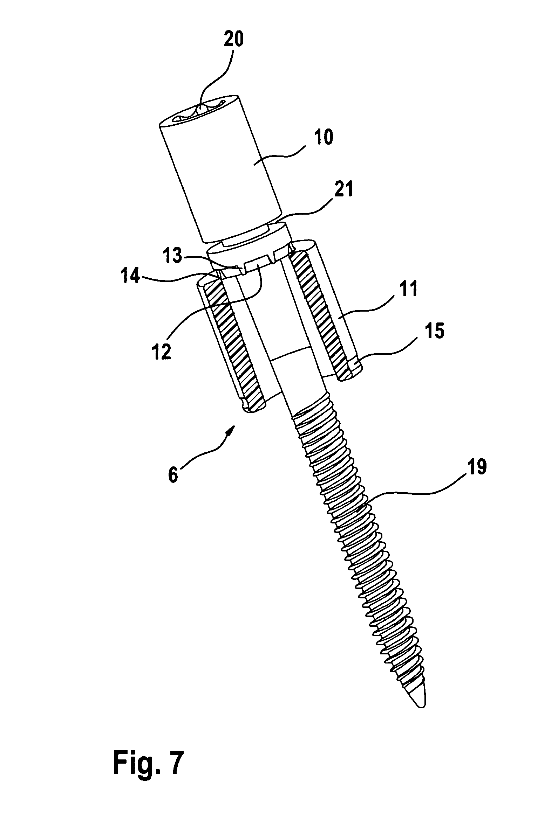

Figur 7 zeigt ein Spreizelement 6 für den Dämmstoffhalter 1, das eine Schraube 19 anstelle des Nagels 7 aufweist. Die Schraube 19 könnte aus Stahl oder einem anderen Metall bestehen und ihr Kopf mit dem zylindrischen Kopf 10 aus Kunststoff umspritzt sein. Im dargestellten Ausführungsbeispiel besteht die Schraube 19 aus Kunststoff und ist wie der Nagel 7 in Figuren 1-4 einstückig mit dem zylindrischen Kopf 10. Der zylindrische Kopf 10 weist einen Werkzeugsitz 20 an seinem der Schraube 19 abgewandten Stirnende zu einem durch Formschluss drehfesten Ansetzen eines nicht dargestellten Drehwerkzeugs auf. Der Werkzeugsitz 20 kann beispielsweise ein Innenstern (Torx), ein Innenmehrkant, beispielsweise ein Innensechskant (Inbus), ein Schlitz oder Kreuzschlitz, ein Außenmehrkant oder ein Vielzahnprofil sein. Das Einbringen der Schraube 19 in den Spreizbereich erfolgt durch Eindrehen, wobei die Schraube 19 eine Zugkraft bewirkt, die die beiden Einschlagsperren, nämlich die Schnappeinrichtung 15, 16 und die Solltrennstellen 14, überwindet.

Der Kopf 10 weist eine tiefe, umlaufende Nut als Solltrennstelle (21, Sollbruchstelle) auf, an der der Kopf 10 bei zu hohem Drehmoment bricht. Der Teil des Kopfs 10, der mit der Schraube 19 verbunden bleibt, überträgt eine Zugkraft, so dass der üblicherweise dünnwandige Teil des Dämmstoffhalters 1 zwischen dem Spreizbereich 4 und dem Hohlschaft 3 entlastet ist. Im Übrigen ist der Dämmstoffhalter 1 aus Figur 7 gleich ausgebildet wie der Dämmstoffhalter 1 aus Figuren 2-4 und funktioniert in gleicher Weise. Übereinstimmende Bauteile sind in Figur 7 mit denselben Bezugszahlen wie in Figuren 2-4 versehen und es wird zur Erläuterung von Figur 7 ergänzend auf die Ausführungen zu Figuren 1-4 verwiesen.

### Dämmstoffhalter

- 1: Dämmstoffhalter
- 2: Halteteller
- 3: Hohlschaft
- 4: Spreizbereich
- 5: Isolierung
- 6: Spreizelement
- 7: Nagel
- 8: Längsnut
- 9: Ringstufe
- 10: Kopf
- 11: Hülse / Teleskopführung
- 12: Fase
- 13: Rippe
- 14: Solltrennstelle
- 15: Rille
- 16: Wulst
- 17: Untergrund
- 18: Loch
- 19: Schraube
- 20: Werkzeugsitz
- 21: Sollbruchstelle
- 15, 16: Schnappeinrichtung
- 14; 15, 16: Einschlagsperre

## Patentansprüche

1. Dämmstoffhalter mit einem Halteteller (2), einem Spreizbereich (4) und einem Hohlschaft (3), der den Spreizbereich (4) mit dem Halteteller (2) verbindet, und mit einem stiftartigen Spreizelement (6), das zum Aufspreizen des Spreizbereichs (4) durch den Hohlschaft (3) in den Spreizbereich (4) einbringbar ist, **dadurch gekennzeichnet, dass** der Dämmstoffhalter (1) eine Teleskopführung (11) für das stiftartige Spreizelement (6) aufweist, die das Spreizelement (6) in Längsrichtung verschiebbar und fluchtend zum Hohlschaft (3) und zum Spreizbereich (4) am Dämmstoffhalter (1) führt, wobei das Spreizelement (6) aus dem Hohlschaft (3) vorsteht, wenn der Dämmstoffhalter (1) nicht aufgespreizt ist und wobei das Spreizelement (6) zum Aufspreizen des Dämmstoffhalters (1) im Hohlschaft (3) versenkbar ist.

2. Dämmstoffhalter nach Anspruch 1, **dadurch gekennzeichnet, dass** die Teleskopführung eine das Spreizelement (6) umschließende und im Hohlschaft (3) versenkbare Hülse (11) aufweist.

3. Dämmstoffhalter nach Anspruch 1, **dadurch gekennzeichnet, dass** das Spreizelement (6) einen Nagel (7) oder eine Schraube (19) aufweist.

4. Dämmstoffhalter nach Anspruch 1, **dadurch gekennzeichnet, dass** das Spreizelement (6) einen thermisch isolierenden Kopf (10) aufweist.

5. Dämmstoffhalter nach Anspruch 1, **dadurch gekennzeichnet, dass** die Teleskopführung (11) eine Einschlagsperre (14; 15, 16) aufweist, die das Spreizelement (6) in einer aus dem Hohlschaft (3) vorstehenden Stellung hält, in der das Spreizelement (6) den Dämmstoffhalter (1) nicht aufspreizt und die durch Ausüben einer ausreichenden Kraft überwindbar ist.

6. Dämmstoffhalter nach Anspruch 5, **dadurch gekennzeichnet, dass** die Einschlagsperre eine Schnappeinrichtung (15, 16) aufweist.

7. Dämmstoffhalter nach Anspruch 5, **dadurch gekennzeichnet, dass** die Einschlagsperre eine Solltrennstelle (14) aufweist.
